# EUROPEAN PATENT APPLICATION

(11) **EP 2 747 399 A1**
(43) Date of publication of application: **25.06.2014**
(21) Application number: 13198561.6
(22) Date of filing: 19.12.2013
(51) Int. Cl.: H04M 3/42, H04L 29/06

(54) **Process for delivering redundant, duplicate interaction recordings**

(30) Priority: 19.12.2012 US 201213720429
(71) Applicant: Cti Group (holding), Inc., Indianapolis, IN 46204-1767 (US)
(72) Inventor: Rao, Siddhartha, Indianapolis, IN Indiana 46228 (US); Duan, Baofu, Lexington, MA Massachusetts 02420-23232 (US)
(74) Representative: Gillard, Matthew Paul

(57) **Abstract**

The requirement to record interactions by organizations is growing, driven by the need to improve the quality of customer interactions in combination with regulatory and fraud protection requirements. The necessity to provide resiliency as well as flexibility to have multiple copies of a recorded interaction is leading many organizations to investigate mechanisms to create multiple recordings of interactions from a single source. The purpose of this invention is to enable this capability on a standards compliant interaction recording source.

## Description

### Field of the Invention

The present invention is of a method and system for intercepting audio, video, and messaging conversations across a computer network, and transparently forking and duplicating the multimedia content onto potentially heterogeneous recording solutions. The purpose of that forking behavior is to enable multiple recording facilities to monitor, store, analyze, and contribute to the interactions being selectively intercepted.

### Description of Related Art

The requirement to record interactions is crucial to many environments, specifically regulatory frameworks, quality management of customer interactions, as well as part of normal business processes. The obligation to record these conversations, especially in a regulatory environment, is critical, as business processes cannot occur if business or financial interactions are not recorded. For example, the Dodd-Frank Wall Street Reform and Consumer Protection Act (H.R. 4173) explicitly requires financially sensitive transactions to be recorded and retained for a length of time for audit and reconciliation purposes.

The criticality of recording and intercepting such interactions is imperative, and as such, demands high levels of resiliency and redundancy. Redundancy can be achieved in a number of ways, but increasingly, clients want to ensure that duplicate copies of the interaction are stored, potentially in geographically disparate locations. It is not guaranteed that any particular location is not susceptible to being unavailable.

In response to that burgeoning requirement, the industry consensus has been to standardize interaction-recording protocols and formats, to lead to transparent, standards based, non-proprietary interaction recording frameworks. These standardizations have led to the creation of the Internet Engineering Task Force (IETF) Session Recording Protocol (SIPREC) working group, which has, in turn, produced a draft, provisional SIPREC architecture standard.

The SIPREC architecture calls for a standards based approach for integrating session recording clients (SRCs) with session recording servers (SRSs). That client-server architecture enables a mechanism for intercepting and recording an interaction. That mechanism is a significant evolution over packet capturing mechanisms and is compliance with WAN based interception technologies. For an example of packet capturing solutions, see U.S. Pat. No. 6,122,665: Communication Management System for Computer Network-Based Telephones. For a better understanding of WAN based interception mechanisms, see U.S. Pat. No. 7,548,609: Process for Scalable Conversation Recording.

While that architecture is ideal for a one-to-one relationship between the SRC and SRS, it is not natively suitable in scenarios where conversations and interactions have to be recorded multiple times for redundancy and compliance. Further, these multiple interaction interceptions may be sent to multiple applications or services. For example, it is conceivable that one copy of a financial services conference call recording could be sent to a compliance and archival facility whereas another copy could be sent to the commercial trader responsible for the transaction.

It is certainly possible that a SRC can simply add a forking mechanism to the platform, that is often not advisable or achievable - either due to SRC capability or by the inherent functional processing load required to provide forking services at the SRC. Take, for example, a mobile phone recording mobile conversations and acting as a SRC. It is highly unadvisable that that device with potentially limited processing and local memory facilities duplicate the recording and streaming capabilities required by a SRC.

There is therefore a need for, and it would be highly advantageous to have, a system and a method for scalable, intermediate, duplication of intercepted interactions, originating from a single session recording client (SRC), to be redistributed to multiple session recording servers (SRSs).

### Summary of the Invention

It is first defined and stipulated that a communication service provider provides communication interaction transmission and reception services to end-users via a pre-existing service delivery platform. These end-users have a requirement to record these interactions multiple times, creating potentially many duplications of the interaction. The service provider wishes to enable that without changing the underlying capabilities of the service delivery platform. In the preferred embodiment of the invention, the service delivery platform natively has the facility to act as a session recording client to one session recording server, as defined by the Internet Engineering Task Force (IETF) draft standard documentation (draft-ietfsiprec-protocol-08).

It is one object of the present invention to create a new endpoint, a bridging service, which acts as both a SRS and SRC. That endpoint, therefore, has the ability to receive a copy of the intercepted conversation from the service delivery platform and then transmit a copy of that intercepted conversation to multiple session recording servers.

It is another object of the present invention that that bridging service does not, by default, modify the actual content of the intercepted conversation and simply retransmits the contents of the intercept conversation to multiple session recording servers.

It is yet another object of the present invention that the bridging service could optionally negotiate between differing media and encoding types between the source SRC and the destination SRS services. The bridging service could optionally choose to not transmit particular portions of the captured interaction based upon policy.

It is yet another object of the present invention that the bridging service could optionally also record the interaction, as well.

Those and other objects of the present invention are explained in further detail with regard to the drawings, description, and claims provided below. The preferred embodiment of the invention involves the following components: the service provider's service delivery platform (ideally a soft switch, session border controller), a bridging service (which is the focus of this invention), and destination recording services. The service delivery platform provided by the service provider is responsible for interaction messaging creation and teardown between initiating and terminating conversation endpoints or parties. The service provider's service delivery platform preferably has a routing or dialing plan which determines the routing of audio, video, or messaging packets through the service provider's infrastructure.

In a preferred embodiment of the invention, the service provider's service delivery platforms as well as destination recording services support a variance of the draft IETF SIPREC architecture.

The steps for performing distribution and replication of recorded interactions are as follows. The initiating party initiates a conversation with the service provider's service delivery platform. That is accomplished by transmitting a conversation invitation. For example, the initiating endpoint might transmit a SIP INVITE specifying an initiating address and terminating address for a conversation. It must be noted, that that interaction may not occur however over just a voice or video interaction, but also includes potentially e-mail, instant message, SMS/MMS, or other media types.

The service provider's conversation router then examines the invitation, specifically examining the initiating or terminating address, or diversion information contained in the invitation. Based upon those three parameters and based upon configurable policies configured on the conversation router, if the conversation is meant to be recorded, monitored, or contributed to, a new session is created from the service provider's service delivery platform to a receiving bridging service.

That new session contains information about the interaction being recorded. In the preferred embodiment of the invention, that session invitation is in conformance with the draft IETF SIPREC specification. Metadata about the interaction, specifically information about the initiating and terminating endpoints, the media type (e.g. MIME type) of the underlying interaction media, as well as other details are transmitted to the bridging service.

The bridging service, in turn, receives that session invitation, inspects a configuration database for the following details: which services to transmit a copy of the recorded interaction to (distribution table) as well as whether to make a local recorded copy of the interaction.

It is conceivable that upon inspection of that configuration data and in concert with a variety of factors including processing load, interconnectivity latency and other functions that the intercepted interaction is neither recorded nor retransmitted to members of the distribution table. That also might be due to blacklisting or rate limiting requirements.

If the results of inspection of the configuration data indicate that the conversation is to be recorded or distributed to members of the distribution table, the following actions occur. The bridging service initiates sessions with members of the distribution table, copying the inherent metadata, into the newly created sessions. The bridging service then affirmatively acknowledges the inbound session from the service delivery platform.

By immediately acknowledging the incoming session setup request, the bridging service is able to immediately receive any media (or media updates) associated with the interaction, without synchronously waiting for members of the distribution table to affirmatively acknowledge the session invitation.

Recording service members of the distribution table then may acknowledge and accept receipt of the session invitation. They may also choose to decline the invitation or may choose to not even respond to the invitation at all.

In the preferred embodiment of the invention, the recording service members of the distribution table may not be actually SIPREC compliant implementations of a SRS. Indeed, it is conceivable, and implemented in the preferred embodiment of the invention that a recording service member of the distribution table may be a simple session initiation protocol (SIP) user agent (UA) that simply receives a plain SIP INVITE with media.

At that point the following sessions are active: an active session from the service delivery platform to the bridging service (hereinafter referred to as the "originating leg") and multiple, accepted and acknowledged, distribution sessions from the bridging service to recording service members of the distribution tables (hereinafter referred to as the "distribution legs").

As conversation requests or responses occur on either the terminating or distribution legs of the recording conversation, those events are passed to the complementary leg of the conversation. In the preferred embodiment of the invention, the host media processor is effectively a SIP Back-to-Back User Agent (B2BUA) for SIPREC session invitations.

If a mechanism of starting or stopping recording (such as an on-demand recording mechanism) is specified in the session re-initiation mechanism from the originating leg, that on-demand start or stop signaling is distributed to all active distribution legs.

One aspect of session initiation from a SRC to a SRS is media negotiation. In the case of messaging, that negotiation is trivial, but that is not the case with audio or video data. In the preferred embodiment of the invention, media negotiation is differentiated between the originating and distribution legs, in the sense that the originating leg may leverage a different transport, encoder/decoder (CODEC), or signaling mechanism than the distribution legs. The bridging service auto-negotiates those variances.

Another aspect of the session is re-initiation of the conversation to redirect to other alternative conversation end-points. An example of that would be voice mail or escalation of an audio conversation to an audio and video conversation. When an originating or distribution leg receives a session re-initiation request, that re-initiation request is transferred to the complementary leg by the bridging service, ensuring proper control and state.

Once media is negotiated, media transport begins on the originating and distribution legs. To accomplish media transport, a new component, the media server is leveraged. That component can be inbuilt into the bridging service or can exist as an external service communicated with via remote or local procedure call. In the preferred embodiment, the media server is a separate service, to enable maximal scaling and optimal resource consumption. When media is received on the originating leg, it is automatically replicated to all distribution legs. If media is received from any of the distribution legs it is contributed to the originating leg in a mixed fashion.

When media is received from the service delivery platform by the bridging service on the originating leg, that media may optionally (determined by configuration) be cleansed to remove echo, jitter, or other quality hindrances. Those cleansing processes are applied before the audio is retransmitted to the distribution legs. If the CODEC is equivalent between the originating and distribution leg, the packet may be sent without modification. Otherwise, a transcoding process may occur as noted.

Upon completion of the interaction on the service delivery platform, the service delivery platform disconnects transmission of the recorded interaction. That disconnection process involves receiving a session disconnect message from the service delivery platform by the bridging service. The bridging service then disconnects all distribution legs, also in situ notifying the media server to stop retransmission of any interaction media.

Distribution legs can also disconnect from the interaction recording session before the originating leg has torn down the recording session.

Throughout this disclosure, the term "Internet" is used to generally designate the global, linked web of millions of networks, which is used to connect computers all over the world. That includes, but is not limited to all intranet, private Internet and virtual private Internet networks. The term "Internet Telephony" is used to generally designate the peer-to-peer, centralized, or decentralized audio, video, or message conversations between endpoints across the Internet. The term "Endpoint" generally designates an audio, video, or messaging device that may or may not be operated by a human being. And "Endpoint" or "Service Delivery Platform" may also represent, but is not limited to, a public switched telephone system (PSTN) interface or gateway, plain old telephone system (POTS), or an Integrated Services Digital Network (ISDN) interface. An Endpoint or Service Delivery Platform may also represent a Session Border Controller (SBC), Private Branch Exchange (PBX), soft switch, media server, media gateway, mobile switching center (MSC), or other mobile or fixed-line network switching center (NSS) or GSM core network.

Throughout this disclosure, the term "Bridging Service" includes, but is not limited to, personal computers (PC) or servers having any branded operating system such as DOS, Windows, OS/2, Linux, Mac OS, Sun Solaris, Java Workstations, Open BSD, Free BSD, AIX, AT&T UNIX, or any other known or available operating system. Such Bridging Service may utilize a variety of conversation signaling protocols, including but not limited to session initiation protocol (SIP), H.323 (incorporated by reference H.225.0, H.245, H.261, H.263, H.225), Cisco SCCP, Signaling System 7 (SS7), or MGCP. The Conversation Router or Host Media Processor may further utilize a variety of connection oriented or connection-less conversation media transports, including Transmission Control Protocol over Internet Protocol (TCP/IP), User Datagram Protocol over Internet Protocol (UDP/IP), Frame Relay, ATM, or ISDN. Those transports may or may not be secured with transport layer security (TLS). The Media Server function, which may or may not be separate from the bridging service, may further utilize a variety of media formats, including but not limited to, G.711 (u-Law), G.722 (a-Law), G.729, GSM, MPEG-2 transport or program streams (audio/video), MPEG-4 (audio/video), MPEG 2.5 Layer III, Windows Media Audio, Windows Media Video, Apple QuickTime, BroadVoice-32, BroadVoice-32 FEC, DVI4, DVI4 Wideband, iLBC, L16PCM Wideband, AMR Narrow Band, AMR Wideband, ADPCM, PCM, Speex, Speex FEC, Speex Wideband, Speex Wideband FEC, H.263, H.264, H.263+, H.264+, Polycom TrueVoice, Polycom Wideband Voice, ASCII text, Unicode text, UTF-7, UTF-8, JPEG, GIF, PNG, DB, or BMP.

It must be further noted that any messaging, especially related to signaling or media transport, may or may not involve intermediaries, other routers, or other network elements which do not affect the net result of the conversation.

### Brief Description of the Drawings

A preferred embodiment of the present invention will be set forth in detail with reference to the drawings, in which:
FIG. 1 is a schematic block diagram of an exemplary bridging service duplicating recordings from a service provider service delivery platform to multiple session recording servers; and
FIG. 2 is an example Internet Engineering Task Force (IETF) session recording protocol (SIPREC) session initiation message (INVITE) with example metadata.

### Detailed Description of the Preferred Embodiment

The following description is intended to provide a description of certain background methods and technologies, which are optionally used in the method and system of the present invention. The present invention is specifically not drawn to those methods and technologies alone. Rather, they are used as tools to accomplish the goal of the present invention.

The system and method of the present invention are particularly intended for operation with Internet telephony networks constructed according to the Session Initiation Protocol (SIP, IETF RFC 3261) and Session Description Protocol (SDP, IETF RFC 2327). Therefore, both RFC 3261 and 2327 are incorporated by reference. The method also specifically lever-ages the Real Time Protocol (RTP, IETF RFC 1889) specification for media transport.

The specific intention for use in internet telephony networks does not preclude use in mobile networks, especially mobile networks that translate between the traditional WIN, CAMEL, EVDO, or GSM architecture and a core IP based voice, media, and messaging architecture which is common in many service providers today.

SIP defines several behaviors for the initiation, negotiation, continuation, and termination of conversations between two endpoints. It is a lightweight; request/response protocol intended to facilitate peer-to-peer messaging and communications. The protocol structure is similar to hypertext transmission protocol (HTTP), in the sense that there is a message header/body structure. The header, in a sense, is the envelope for the message, often containing request/response parameters, addressing, and content length and encoding parameters. The body can contain any arbitrary content, but typically contains SDP (especially in audio/video telephony). Or if the SIP message is a MESSAGE request, the body can contain an instant message (such as SMS/MMS or IM).

SDP describes the detail of a media (audio/video) session. It typically contains information about the format, timing, connection, and streaming or multicast nature of the media session. It can also contain multiple attachments. When used in combination with SIP, the SDP is an offer/answer model. Both endpoints exchange SDP to detail their half of a duplex media session. Optionally, SDP can be used to setup a half-duplex media session (send or receive media only). One of the components of an SDP message is the description of the connection information. Connection information typically includes a UDP port that is prepared to receive RTP packets.

RTP is basically a common structure for sending real-time sensitive data such as audio or video. An RTP packet is a packet that contains information about the enclosed media content, and a timestamp, which can be used to synchronize and reassemble a media stream at an endpoint. RTP is often delivered over a connectionless protocol, such as UDP, to ensure low-latency delivery of media streams.

RTP packets often do not arrive in order, due to the connection-less nature of the underlying transport. When RTP packets do not arrive in order, a component known as a "jitter buffer" is used to re-assemble the out of order or latent RTP packets into a single continuous media stream.

The session recording protocol, SIPREC, builds upon these architectural concepts. The stated objective of SIPREC is not to initiate a live session between two parties, but rather to replicate that session to a recording service. The session recording client (SRC) creates a SIP session with a session recording server (SRS). That SRC to SRS SIP session passes not only information about the interaction session being recorded, but also SDP related to the media that should accompany the interaction.

For example, a SIPREC SIP INVITE typically contains a SIP message body, which has an XML formatted metadata element representing metadata about the interaction being recorded as well as SDP related to the accompanying media.

The principles and operation of a method and system according to the present invention may be better understood with reference to the drawings and the accompanying description.

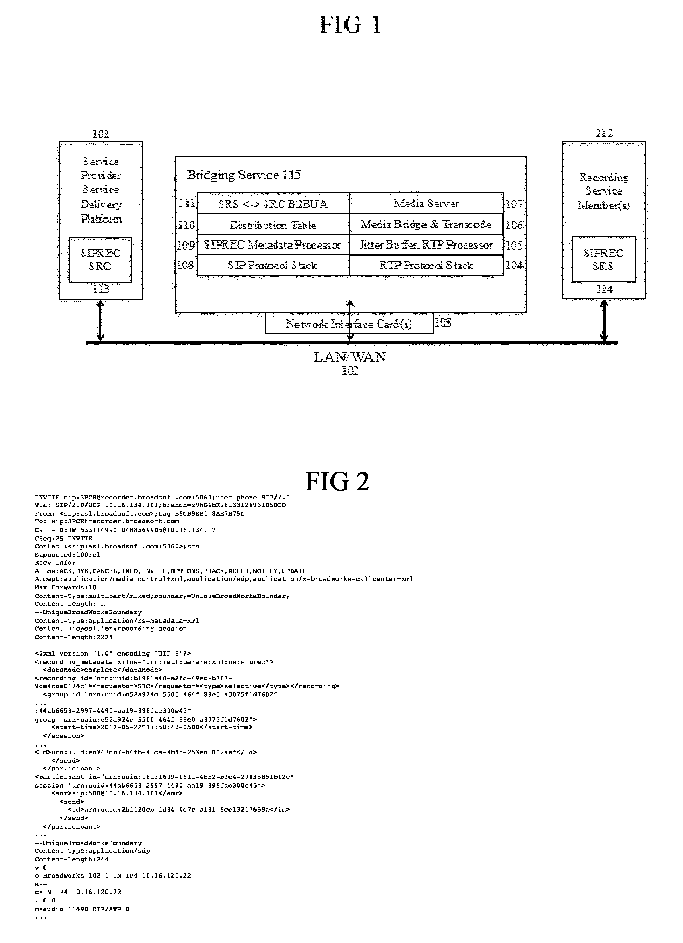

Referring now to the drawings, FIG. 1 is a block diagram of a Bridging Service system that duplicates interaction-recording messaging and media to potentially multiple session recording servers over a computer network. There are three major components to the present invention.

The first is the Service Provider Service Delivery Platform 101. In the preferred embodiment of the current invention, that Service Provider Service Delivery Platform is a session border controller, SIP application server, or a mobile switching center (MSC). A component of that Service Delivery Platform **101** is the ability to intercept interactions and present these intercepted interactions in a fashion compliant with the IETF SIPREC standard session recording client (SRC) **113.**

The Service Provider Service Delivery Platform **101** is responsible for end-user subscriber management, conversation initiation and teardown, and may communicate with a myriad of endpoints, utilizing a variety of signaling and media transport protocols. For example, the Service Delivery Platform **101** may converse with endpoints using MGCP, H.323, Signaling System 7 (SS7) (e.g. a Wireless Intelligent Network service), or SIP. The Service Delivery Platform **101** gets a variety of initiation requests to start conversations. For example, the Service Delivery Platform **101** may receive a SIP INVITE, a message that specifically requests the creation of a conversation from a particular SIP endpoint to a peer endpoint. The destination address and diversion information of those initiation requests are inspected to establish a route to a particular conversation peer. Importantly, those addresses are also validated against a subscriber database to determine if the communication should be intercepted and recorded. If the endpoint initiating or receiving the request is determined to be subscribing to a particular recording service, a session is initiated, in a configurable fashion, from the from the Service Delivery Platform SIPREC SRC **113** to the Bridging Service **115.**

That session invitation is in a form similar to what is outlined in FIG. **2.** FIG. **2** describes an example Session Initiation Protocol (SIP) Session Recording Protocol (SIPREC) INVITE. That invitation principally consists of three properties.

The first property is a routing envelope (a typical SIP INVITE envelope) that contains addressing information related to the delivery of the message across the LAN/WAN to the Bridging Service. The second property is an XML metadata component (MIME encoded in the INVITE content), which describes the interaction being recorded. The third property is a Session Description Protocol (SDP) component (also MIME encoded in the INVITE content), which describes the associated media stream being recorded.

The session invitation is passed to the LAN/WAN **102** via the network mechanism innate to the Service Provider Service Delivery Platform **101** and is not specified in the preferred embodiment of the invention.

The session invitation is received by the Network Interface Card(s) (NICs) **103,** or other suitable device(s), which enable access and connectivity to the computer network **102.** The computer network can be a Local Area Network (LAN) or Wide Area Network (WAN), for example. Other exemplary examples include Virtual Private Networks (VPNs), Multiprotocol Label Switched Networks (MPLS), or virtual switched local area networks (VLANs).

The NIC **103** is preferably any standard, off-the-shelf commercial product that enables the Bridging Service to be connected to any suitable computer network (for example, Intel PRO/100 VE Network or the NE2000 Adapter manufactured by Novell or any other such suitable product). Examples of such suitable computer networks include, but are not limited to, any standard LAN such as Ethernet (IEEE Standard 802.3), Fast Ethernet (IEEE Standard 802.10), Token Ring (IEEE Standard 802.5), Synchronous Optical Networking (SONET), and FDDI. Examples of the physical conduction mechanism include, but are not limited to, 100-Base-Tx, Optical Fiber, or CAT-6.

Only TCP/IP or UDP/IP packets on the computer network **102** are passed through the Network Interface Card 103 to the SIP Protocol Stack **108** or RTP Protocol Stack **104.** Those packets preferably adhere to the Internet Protocol and contain various addressing information, including a port number and destination IP address, as defined by the Berkeley socket standard. The port number and destination IP address determine whether the SIP stack 108 or the RTP stack **104** processes the packet. After that determination is made, the packet may be transferred to the SIP stack **108.**

In the preferred embodiment of the current invention, the RTP stack **104** also, optionally, handles RTP Control Protocol (RTCP) messaging requirements and indeed has the ability to proxy RTCP messaging between the Originating Legs and Distribution Legs.

In the preferred embodiment of the current invention, there may be multiple network interface cards **103** and multiple bridging services **115.** Those units, further, might access the computer network **102** through a load balancing unit that load balances, clusters, or ensures redundant connectivity with other components such as the Service Provider Service Delivery Platform **101.** That redundancy and balancing can occur in a variety of fashions, in multiple levels of the Open Systems Interconnection Basic Reference Model (OSI Reference Model) (e.g. OSI Level 3: Networking Level (IP) or OSI Level 7: Application Level (SIP)). Other protocols, such as Distributed Name Service (DNS) Service Records (SRV) would be leveraged, in a preferred embodiment, to provide additional levels of resilience, either in an active passive or fully active fashion, to the Bridging Service components **115.**

The SIP stack **108** reads the invitation into memory. It further handles any transport layer security (TLS) aspects of the session initiation, such as decryption or key exchange. If the packet does not adhere to the SIP or SDP specifications incorporated by reference herein, the packet is rejected. If the packet does adhere to the SIP or SDP specifications incorporated herein, or approximates adherence to the specifications, the packet is fully processed and converted into a SIP Session object.

The process of conversion from an in-memory packet to a Session object is accomplished by parsing the SIP grammar according to the SIP specifications incorporated therein. The Session object is composed of associations providing access to specific SIP header values by a header key. That abstraction aids the Bridging Service in parsing, retrieving, responding to, and filtering SIP messages.

At that point, the SIP request or response type is analyzed and compared against a list of active sessions stored in memory. Once a session has been identified, the SIP message is passed to a message processor, the SIPREC Metadata Processor **109.** The SIPREC Metadata Processor **109** further processes the session initiation by parsing the metadata properties described in FIG 2**.**

After metadata is captured and the session initiation is validated against the schema defined in the IETF SIPREC format (or approximate adherence is achieved), the Bridging Service **115** examines the Distribution Table **110** to determine if the message should be replicated to multiple Recording Service Member(s) **112.**

Wildcards, regular expressions, or specific metadata keys to determine the target Recording Service Member(s) 112 may key the Distribution Table lookup. The result of that lookup is a Distribution Table Entry object. That Distribution Table Entry object contains, principally, an IP address, a port, as well as other addressing information required to transmit a SIPREC session initiation to the SIPREC SRS **114.**

In the preferred embodiment of the current invention, Recording Service Members configured in Distribution Table Entries are periodically monitored by the Bridging Service **115.** That monitoring is to determine the state of a Recording Service Member, as to whether it is available to record or capture an interaction. That monitoring is accomplished by sending a SIP OPTIONS poll to the Recording Service Member. If the Recording Service Member responds, in any particular fashion in compliance with the SIP specification incorporated herein, the Recording Service Member is considered available and online.

If Distribution Table Entry object(s) are returned to the Bridging Service **115,** the Bridging Service initiations a new SIPREC session invitation. It must be noted that in other embodiments of the current invention, this invitation was actually a SIP INVITE (without additional SIPREC metadata). The addressing of that SIP INVITE, in the preferred method, may be unique and configurable as determined by the Distribution Table Entry object. That however, is configurable, and indeed might simply be a pass through of the addressing.

The XML metadata component of the new SIPREC session invitation, however, in the preferred embodiment, is incorporated, without modification, into the new session invitation. However, the preferred embodiment does have configuration information that may influence what metadata elements are passed, due to privacy or confidentiality reasons.

The Session Description Protocol (SDP) component of the SIPREC session invitation is modified to present the IP addressing and port information of the RTP Protocol Stack **104.**

After the new SIPREC session invitation is constructed, that session invitation is transmitted to the LAN/WAN **102** via the Network Interface Card(s) **103.** The final destination of that invitation is the SIPREC SRS **114** incorporated within a Recording Service Member **112.**

A Recording Service Member **112** may not receive and acknowledge that SIPREC session invitation or respond with a SIP error code in response to the invitation. The reason for that could be due to either network inaccessibility, the offline state of the Recording Service Member, or any number of other factors.

In the event that the message is not acknowledged or an error condition occurs in communication between the Bridging Service **115** and a Recording Service Member's **112** SIPREC SRS **114** component, the interaction is not replicated to that specific Recording Service Member, but processing continues for other Recording Service Members.

In such an event, the Bridging Service **115** may document that error condition. In the preferred embodiment of the current invention, the Bridging Service **115** not only documents that error condition but also triggers a Simple Network Management Protocol (SNMP) trap notification. That trap notification can be used by the Service Provider to determine failure of a particular Recording Service Member **112.**

The Recording Service Member **112,** however, typically acknowledges receipt and affirmatively negotiates a SIPREC session as defined in the SIPREC and SIP specifications incorporated herein. Session processing occurs on both the originating and distribution legs of the conversation. Session processing may or may not involve other third party intermediaries, such as session border controllers or other SIP or non-SIP endpoints. That bi-directional transmission of session events is performed by the SRS <-> SRC Back to Back User Agent (B2BUA) **111.**

A SIP 200 OK response is sent from Recording Service Member(s) **112** to the Bridging Service **115.** Session Description Protocol CODEC negotiation occurs specified by configurable policy, between the Recording Service Member(s) **112** and the Bridging Service **115.** In the preferred embodiment, CODEC negotiation further occurs, specified by configurable policy, between the Bridging Service and the Service Provider Service Delivery Platform **101,** prior to CODEC negotiation for the distribution legs.

When a session has been received and distributed, media transmission occurs, primarily originating media from the originating leg for distribution to the distribution legs. Typically, that media is unidirectional, in the sense that the media originates from the Service Provider Service Delivery Platform **101** is directed to the Bridging Service **115** and simply relayed on to Recording Service Member(s) **112.** That however is not mandatory. Indeed, media contribution could occur from the distribution legs onto originating legs. That contribution would be implemented based upon a specified policy (e.g. mix contribution audio into a conferenced stream).

When the Service Provider Service Delivery Platform **101** receives media (e.g. audio, video, and picture content) from an initiating or terminating endpoint, that content is replicated via RTP on the originating leg to the Bridging Service **115.** That is accomplished by transmitting RTP packets over the LAN/WAN **102,** via the Network Interface Cards **103,** and arriving on the RTP Protocol Stack **104.** The RTP protocol stack **104** and the Jitter Buffer, RTP Processor **105** decodes incoming RTP packets, re-orders, synchronizes, and processes the packet to produce a consistent media stream that represents the audio, video, picture, or messaging content originally transmitted by the initiating or terminating endpoints known only to the Service Provider Service Delivery Platform **101.** Audio Packets may include dual tone, multi-frequency digit tones (DTMF, IETF RFC 2833). These processed and cleansed packets are then passed to the Media Bridge & Transcode **106** function.

The purpose of the Media Bridge & Transcode **106** function is to transmit to the complementary leg of the conversation (distribution for originating and vice versa) for the Bridging Service **115** through the jitter buffer, transcoding, encoding, and RTP stack **104, 105, 106.** The addressing and destination of these packets is determined by the 200 OK response to the Session Initiation described previously. These details are submitted and captured by the Media Server **107.**

The media bridge **106** may optionally normalize the media streams. Normalization is the process of converting the media content in the media stream into a least-common denominator format and then re-encoding the least common denominator format into the target media stream before being transmitted to a corresponding originating or distribution leg. For example, if the incoming audio from the originating leg is of the ITU G.711 CODEC, that media is converted into pulse code modulation (PCM) format and then re-encoded in ITU G.729 before being transmitted to a distribution leg, if the distribution leg's preference is G.729.

After the interaction has completed and has been acknowledged as being completed by the Service Provider Service Delivery Platform **101,** a SIP SIPREC BYE is sent from the Service Provider Service Delivery Platform SIPREC SRC **113** to the Bridging Service **115** via the same facilities by which the INVITE was transmitted. That BYE is passed on to distribution legs by the B2BUA **111.** At that point the interaction has been duplicated, together with corresponding media streams.

While a preferred embodiment has been set forth in detail above, those skilled in the art will readily appreciate that other embodiments can be realized within the scope of the invention. For example, disclosures of specific technologies and standards are illustrative rather than limiting. Therefore, the present invention should be construed as limited only by the appended claims.

## Claims

1. A method for producing multiple recordings of an interaction taking place over a communication network, the method comprising:
(a) providing a bridging service in communication with the communication network, the bridging service being configured to act as both a session recording client and a session recording server;
(b) receiving, in the bridging service, a request to record the interaction from a device of a user who will participate in the interaction;
(c) intercepting the interaction in the bridging service; and
(d) forwarding the interaction from the bridging service to a plurality of session recording servers on the communication network for recording the interaction.

2. The method of Claim 1, further comprising recording the interaction in the bridging service.

3. The method of Claim 1, wherein the interaction comprises at least one of an audio communication, a video communication, and a messaging communication.

4. The method of Claim 1, wherein the bridging service stores a configuration database indicating which ones of the session recording servers on the network should receive the interaction for recording.

5. The method of Claim 1, wherein step (d) comprises:
(i) sending a message from the bridging service to each of the plurality of session recording servers; and
(ii) forwarding the interaction from the bridge server to each of the plurality of session recording servers that acknowledges the message sent in step (d)(i).

6. The method of Claim 1, further comprising providing a media server to perform quality control on media included in the interaction.

7. The method of Claim 6, wherein the media server also converts the media from a first format into a second format.

8. A bridging service for producing multiple recordings of an interaction taking place over a communication network, the bridging service comprising:
a network adapter for communicating with the communication network; and
a processor configured for:
receiving a request to record the interaction from a device of a user who will participate in the interaction;
intercepting the interaction; and
forwarding the interaction to a plurality of session recording servers on the communication network for recording the interaction.

9. The bridging service of Claim 8, wherein the processor is further configured for recording the interaction in the bridging service.

10. The bridging service of Claim 8, wherein the processor is configured such that the interaction comprises at least one of an audio communication, a video communication, and a messaging communication.

11. The bridging service of Claim 8, wherein the processor is configured to store a configuration database indicating which ones of the session recording servers on the network should receive the interaction for recording.

12. The bridging service of Claim 8, wherein the processor is configured for:
(i) sending a message to each of the plurality of session recording servers; and
(ii) forwarding the interaction to each of the plurality of session recording servers that acknowledges the message.

13. The bridging service of Claim 8, further comprising a media server to perform quality control on media included in the communication.

14. The bridging service of Claim 13, wherein the media server is configured to convert the media from a first format into a second format.
